# EUROPEAN PATENT SPECIFICATION

(11) **EP 2 112 846 B1**
(45) Date of publication and mention of the grant of the patent: **01.12.2010**
(21) Application number: 09158684.2
(22) Date of filing: 24.04.2009
(51) Int. Cl.: H04W 36/04

(54) **Communication system and method for supporting direct communication between femto cell and macrocell**
Kommunikationssystem und Verfahren zur Unterstützung von direkter Kommunikation zwischen Femtozelle und Makrozelle
Système de communication et procédé pour la prise en charge de la communication directe entre une cellule femto et une macrocellule

(30) Priority: 25.04.2008 KR 20080038694
(43) Date of publication of application: 28.10.2009
(73) Proprietor: Samsung Electronics Co., Ltd., Suwon-si, Gyeonggi-do (KR)
(72) Inventor: Lee, Neung Hyung, Gyeonggi-do (KR); Kwon, Sung Oh, Gyeonggi-do (KR); Kim, Jong In, Gyeonggi-do (KR); Youm, Ho Sun, Gyeonggi-do (KR); Bae, Eun-Hui, Gyeonggi-do (KR)
(74) Representative: Ketelaars, Maarten F.J.M.

(56) References cited:
- WO-A-2008/033259
- US-A1- 2006 154 668
- YONG IL OH ET AL: "Implementation of internet protocol multimedia subsystem for femtocell network" ADVANCED COMMUNICATION TECHNOLOGY, 2009. ICACT 2009. 11TH INTERNATIONAL CONFERENCE ON, GIRI, PISCATAWAY, NJ, USA, 15 February 2009 (2009-02-15), pages 387-390, XP031446140 ISBN: 978-89-5519-138-7

## Description

### BACKGROUND OF THE INVENTION

### I. Field of the Invention

The present invention relates generally to a communication system and method, and more particularly, to a communication system and method for supporting direct communication between a femto base station and a macro base station.

### 2. Description of the Related Art

A femtocell is an indoor cellular base station characterized by a small size and a low power capacity for use in a residential or a small business environment. The term "femtocell" is used to describe a more evolved cell, although it may also be referred to as a picocell. The femtocell is a small base station which connects to a broadband router and bridges the conventional 2nd Generation (2G) and 3rd Generation (3G) voice and data traffic to a mobile operator's backbone network using a residential DSL,

US patent application US2006/154668 A1 describes a wireless telephony communications system includes at least one macro cell for communicating both voice and data with a mobile communications device across a first wireless link and at least one micro cell for communicating data with the mobile communications device across a second wireless communication link. Each micro cell communicates signaling information through the macro cell via a wireless link to a control element that manages the micro cells. Using a wireless link to communicate signaling between each micro cell and the control element in the UMTS system eliminates the need for a wired back haul link, thereby reducing access costs.

3rd Generation Partnership Project Long Term Evolution (3GPP LTE) describes a base station part that includes an evolved Node B (eNB) and a home eNB. The eNB is responsible for managing an ordinary macrocell, and the home eNB is responsible for managing a femtocell. Within a mobile communication system composed of eNBs and home eNBs, the eNBs are connected to the core network by means of an S1 interface. More particularly, the eNBs (not including the home eNBs) are interconnected with each other by means of an X2 interface. The home eNBs are connected to the core network through an Internet Service Provider (ISP) network, which differentiates the home eNB from the conventional base station. This is advantageous in view of wired and wireless integration service, but also results in problems with respect to radio resource management.

One significant problem is that there is no communication interface specified between a home eNB and an eNB (or another home eNB) like the X2 interface between the eNBs. Accordingly, in order for a home eNB to communicate with another home eNB or an eNB, it must connect to the core network. The absence of a direct communication interface between a home eNB and an eNB (or another home eNB) is likely to cause problems especially when a delay sensitive communication is required between them. Accordingly, there is a need to develop a communication mechanism between the home eNBs and between a home eNB and an eNB.

### SUMMARY OF THE INVENTION

to the present invention has been made to address at least the above problems and/or disadvantages and to provide at least the advantages described below. Accordingly, an aspect of the present invention provides a communication method and system for supporting direct communication between a femtocell base station and a macrocell base station.

According to one aspect of the present invention, a mobile communication system includes at least one macro base station which allocates a resource to user equipments. The mobile communication system also includes at least one femto base station which operates in a base station mode for serving terminals located within a service area of the at least one femto base station and operates in a user equipment mode for communicating with the at least one macro base station using the resource allocated by the at least one macro base station.

The at least one femto base station may transition from the base station mode to the user equipment mode and may maintain the user equipment mode for a duration of the resource allocated by the at least one macro base station. The at least one macro base station may allocate a persistent resource to the at least one femto base station. The at least one femto base station may have a first period and a second period, shorter than the first period, and may enter the user equipment mode at a start of the first period and when the at least one femto base station has data to transmit at a start of the second period.

The at least one femto base station may enter the user equipment mode when a predetermined event occurs and may operate in the user equipment mode for a duration of the resource allocated by the at least one macro base station. The at least one macro base station may allocate a non-persistent resource to the at least one femto base station.

The at least one femto base station may exchange control data for a handover with the at least one macro base station in the user equipment mode.

According to another aspect of the present invention, a communication method of a femto base station in a communication system including at least one macro base station and at least one femto base station is provided. A base station mode is operated in for serving at least one user equipment located in a service area of the femto base station. A user equipment mode is operated in for communicating with the at least one macro base station using resource allocated by the at least one macro base station.

Operating in the user equipment mode may include transitioning from the base station mode to the user equipment mode.

Transitioning from the base station mode to the user equipment mode may occur periodically.

Operating in user equipment mode may include transitioning, when a predetermined event occurs in the base station mode, from the base station mode to the user equipment mode. Operating in the user equipment mode may further include determining, when a start of a first period is not detected, whether a start of a second period, which is shorter than the first period is detected, and transitioning, when at start of the second period is detected and transmission data exists, from the base station mode to the user equipment mode.

When the femto base station transitions from the base station mode to the user equipment mode, the macro base station may allocate a persistent resource. Operating in the user equipment mode may include exchanging control data required for a handover with the at least one macro base station.

### BRIEF DESCRIPTION OF THE DRAWINGS

The above and other aspects, features and advantages of the present invention will be more apparent from the following detailed description when taken in conjunction with the accompanying drawings, in which:
FIGs. 1A and 1B are schematic diagrams illustrating a communication system according to an embodiment of the present invention;
FIGs. 2A to 2C are block diagrams illustrating communication systems according to embodiments of the present invention;
FIG. 3 is a timing diagram illustrating a periodic mode transition of a femto-BS of the communication system according to an embodiment of the present invention;
FIG. 4 is a flowchart illustrating an operation mode transition procedure of a femto-BS according to an embodiment of the present invention;
FIG. 5 is a timing diagram illustrating an event-driven mode transition of a femto-BS of the communication system according to an embodiment of the present invention;
FIG. 6 is a flowchart illustrating an operation mode transition procedure of a femto-BS according to another embodiment of the present invention; and
FIG. 7 is a signaling diagram illustrating a handover process between a femto-BS and a macro-BS in a communication system according to an embodiment of the present invention.

### DETAILED DESCRIPTION OF PREFERRED EMBODIMENTS

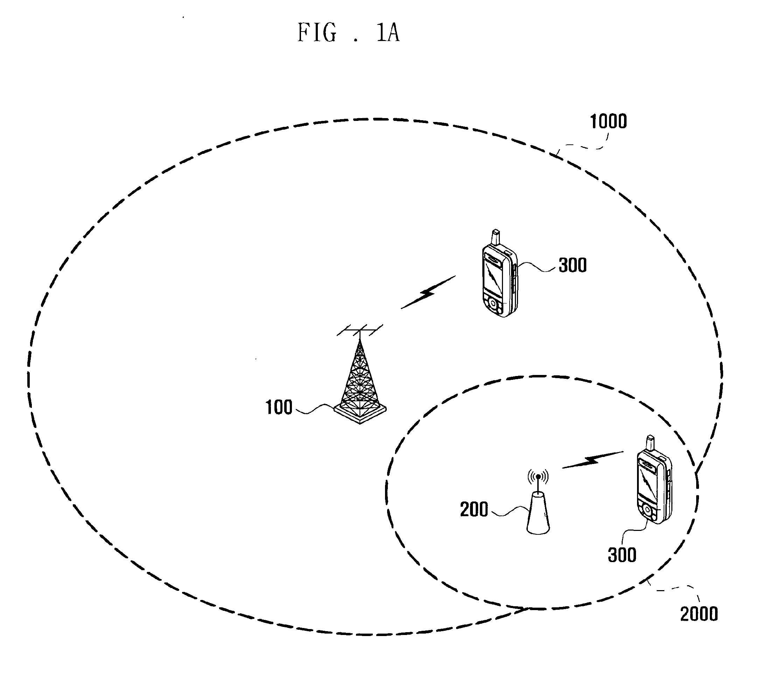

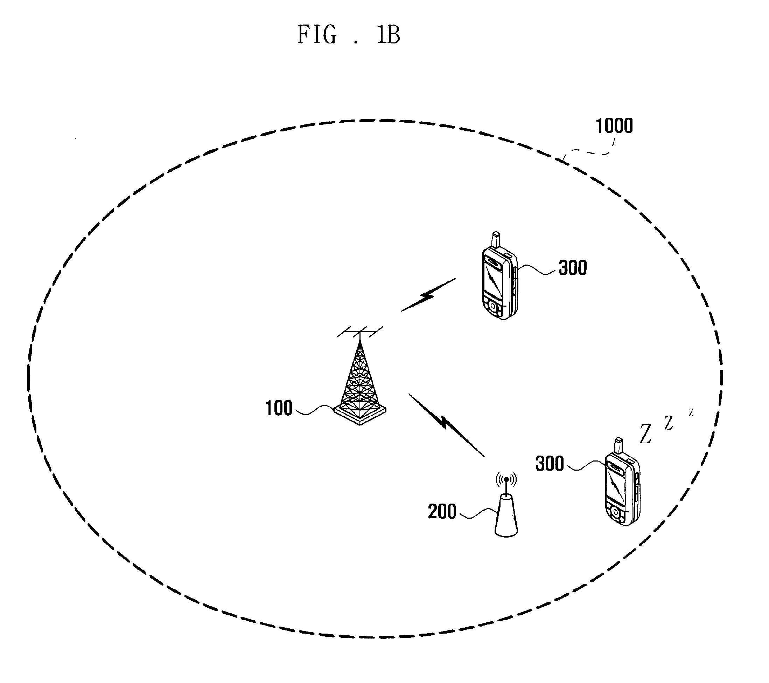

Preferred embodiments of the present invention are described in detail with reference to the accompanying drawings. The same or similar components are designated by the same or similar reference numerals although they are illustrated in different drawings. Detailed descriptions of constructions or processes known in the art may be omitted to avoid obscuring the subject matter of the present invention. FIGs. 1A and 1B are schematic diagrams illustrating a communication system according to an embodiment of the present invention.

Referring to FIGs. 1A and 1B, the communication system includes a macrocell 1000 and a femtocell 2000.

The macrocell 1000 is a cell of an ordinary cellular communication network. A macro Base Station (macro-BS) 100 manages the macrocell 1000. The femtocell 2000 is smaller in coverage than the macro cell 1000. For example, the femtocell 2000 may have coverage for a house at most, or a room of the house. The femtocell 2000 can be deployed for covering indoor and outdoor shadow area, and provides multiple users with high quality data services. A femto Base Station (femto-BS) 200 manages the femtocell 2000. The femto-BS 200 can cover a shadow area of the macro-BS 100, or provide the service to a specific User Equipment (UE). In an embodiment of the present invention, the femto-BS 200 provides the service to UEs located in its radio coverage and communicates with the macro-BS 100 directly. For this purpose, the femto-BS 200 operates in two operation modes: a BS mode for serving the UEs located in its coverage, and a UE mode for communicating, as a UE, with the macro-BS 100.

The femto-BS 200 operates in the BS mode during a "predetermined time period" and operates in the UE mode in a fraction of the "predetermined time period." The predetermined time period can be negotiated between the macro-BS 100 and the femto-BS 200. The predetermined time period also can be determined by the femto-BS 200. The fraction of the predetermined time period can be a time duration for the femto-BS 200 to exchange data with the macro-BS 100.

FIG. 1A shows a situation in which the femto-BS 200 operates in the BS mode. The macro-BS 100 serves the UE located in the macrocell 1000, and the femto-BS 200 serves the UE 300 located in the femtocell 2000.

The femtocell 2000 is defined by the radio coverage of the femto-BS 200, and the femto-BS 200 is located within the macrocell 1000 defined by the radio coverage of the macro-BS 100, such that the femtocell 2000 is overlapped with the macrocell 1000.

In the BS mode, the femto-BS 200 is connected to the core network via an ISP network to relay data between the UE 300 and another UE.

FIG. 1B shows a situation in which the femto-BS 200 operates in the UE mode. In this situation, the femto-BS 200 acts as a UE served by the macro BS 100. In order to be served by the macro-BS 100, the femto-BS 200 transitions to the UE mode periodically or when a specific event occurs. For example, when the UE 300 associated with the macro-BS 100 enters the femtocell area and requests handover to the femto-BS 200, the femto-BS 200 transitions from the BS mode to the UE mode.

In order to communicate with the macro-BS 100, the femto-BS 200 must be in the macrocell 1000 of the macro-BS 100. In this case, the femto-BS 200 operates in the UE mode and is served by the macro-BS 100 within the macrocell 1000.

Before transitioning to the UE mode, the femto-BS 200 causes the UE served by the femto-BS 200 to enter a sleep mode. After transitioning to the UE mode, the femto-BS is allocated a resource for communication with the macro-BS 100. Since the femto-BS 200 can communicate with the macro-BS 100 directly, it is possible to solve problems caused by transmission delay, particularly when a seamless message exchange is required as in a handover process.

Since the femto-BS 200 acts as the UE in its UE mode, it consumes transmission power (Tx power) like an ordinary UE. Accordingly, it is advantageous to ignore interferences to other indoor wireless devices and neighbor cells in transmission and reception power.

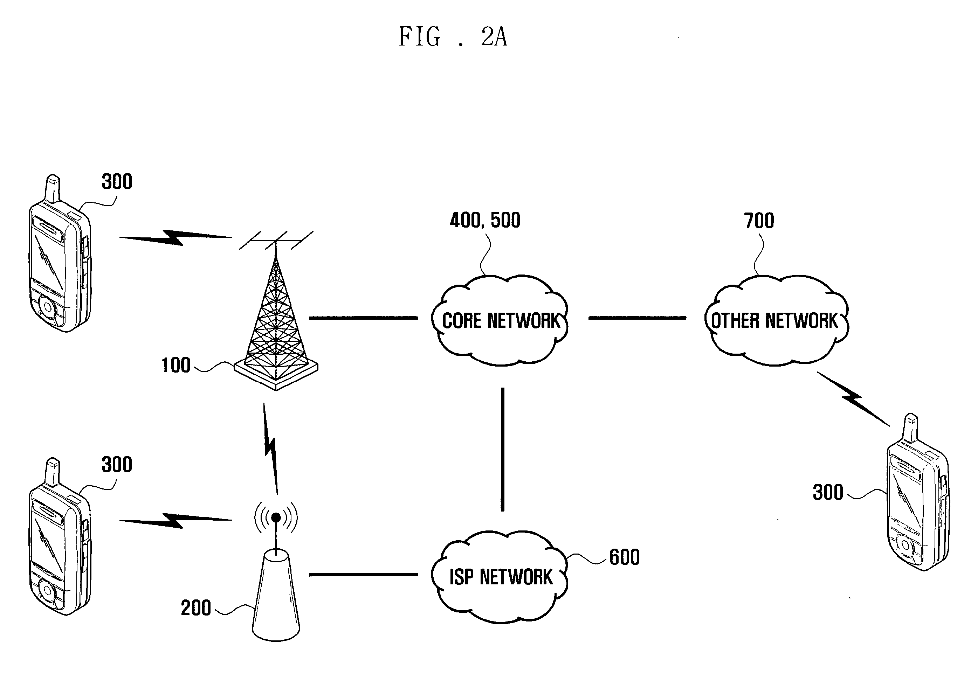

FIGs. 2A to 2C are block diagrams illustrating communication systems according to embodiments of the present invention.

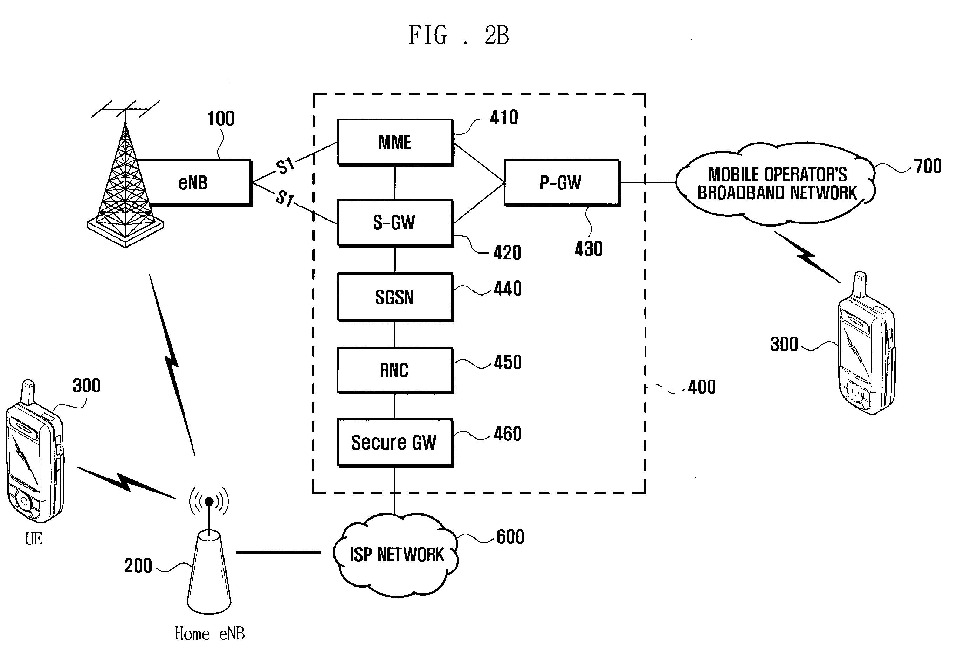

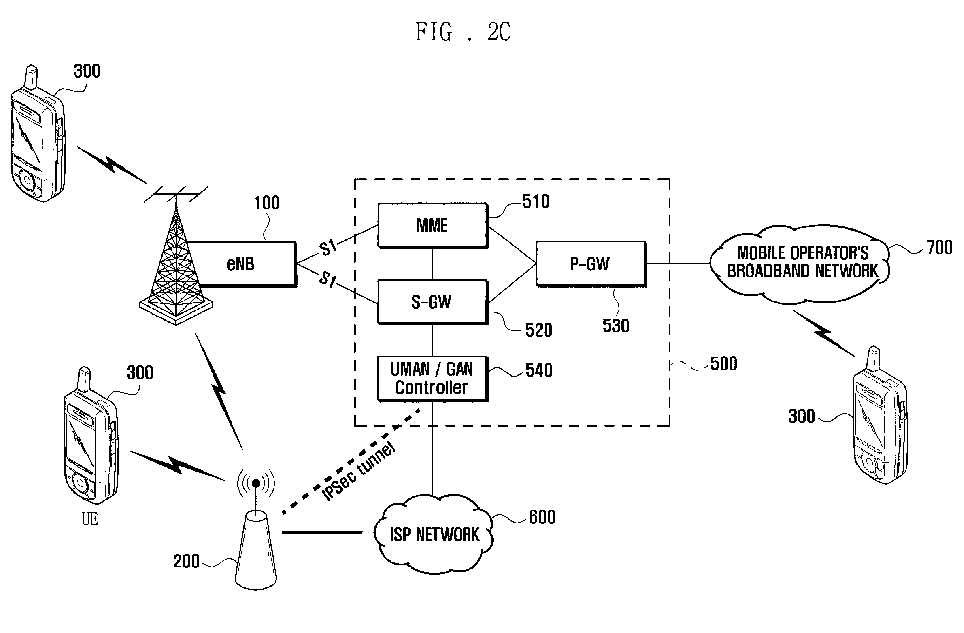

Referring to FIG. 2A, a mobile communication system includes a core network 400 (or 500), a macro-BS 100 connected to the core network 400 (or 500), a femto-BS 200 connected to the core network via an ISP network 600, another network 700 connected to the core network 400 (or 500), and UEs 300 that are connected to the macro-BS 100, the femto-BS 200, and the other network 700. The core network 400 (or 500) is an operator's network structured as shown in FIGs. 2b and 2c.

In FIG. 2B, the core network 400 includes a Mobility Management Entity (MME) 410, a Serving Gateway (S-GW) 420, a Packet Data Network Gateway (P-GW) 430, a Serving General Packet Radio Service (GPRS) Support Node (SGSN) 440, a Radio Network Controller (RNC) 450, and a Secure Gateway (Secure GW) 460. Here, the MME 410 is an entity for managing the UE's mobility, and S-GW 420 is a gateway connecting to the macro-BS 100 by means of an S interface. The MME 410 and S-GW 420 are integrally called an access Gateway (aGW). The P-GW 430 is a gateway connected to a Packet Data Network (PDN), and the core network 400 connects the other network 700 by means of the P-GW 430. The secure GW 460 provides an Internet Protocol (IP) -based Iub interface for the interconnection of the femto-BS 200 and the RNC 450. The RNC 450 is an entity that manages the radio resources of the femto-BS (NodeB) 200, and the SGSN 440 is an entity that supports the GPRS. In FIG. 2C, the core network 500 includes an MME 510, an S-GW 520, a P-GW 530, and an Unlicensed Mobile Access Network/General Access Network (UMAN/GAN) controller 540. The UMAN controller is an entity that controls the Unlicensed Mobile Access (UMA), and the GAN controller is an entity that controls legacy network access including UMA. The UMAN/GAN controller 540 is configured with the functions of the secure GW 460 of FIG. 2b. The MME 510, S-GW 520, and P-GW 530 are identical with those of FIG 2b in function.

The macro-BS 100 is connected to the MME 410 (510) and S-GW 420 (520) by means of an S1 interface, and the femto-BS 200 is connected to the core network 400 (500) via the ISP network 600. The femto-BS 200 is connected to the core network 400 via the ISP network 600 and the secure GW 460 in FIG. 2b, whereas the femto-BS 200 is connected to the core network 500 via the ISP network 600 and the UMAN/GAN controller 540.

The macro-BS 100 can be an eNB.

In an embodiment of the present invention, the macro-BS 100 allocates resources to the femto-BS 200 such that the femto-BS 200 can communicate with the macro-BS 100 in the UE mode. The resources include uplink and downlink resources. The macro-BS 100 performs frame-level scheduling fairly on the radio frame composed of the uplink and downlink. For example, the macro-BS 100 performs scheduling with a radio frame of 10ms divided into 20 frames. The macro-BS 100 continues allocation of resources enough for processing the traffic in the service of which traffic is predictable. This kind of resource is called a persistent resource. When the femto-BS 200 requests periodic frame allocation, the macro-BS 100 allocates the persistent resource.

As for the service of traffic that is unpredictable, the macro-BS 100 allocates the resource temporarily. This kind of resource is called a non-persistent resource. When the femto-BS 200 requests the macro-BS 100 to allocate resources for a specific event, the macro-BS 100 allocates the non-persistent resource.

The numbers of frames for allocating persistent and non-persistent resources to the femto-BS 200 can be predetermined values. In an embodiment of the present invention, the resource allocation is described under the assumption of 3 frames for the persistent resource and 4 frames for the non-persistent resources. The persistent and non-persistent resource frames include uplink and downlink frames, respectively. As aforementioned, the femto-BS 200 transitions between the UE mode and the BS mode alternately. In the case of transition from the UE mode to the BS mode, the femto-BS 200 stores the synchronization with the UE, which is being served by the femto-BS 200 in the BS mode. If it is the first attempt to access the macro-BS 100, the femto-BS 200 is required to perform a synchronization process with the macro-BS 100.

The femto-BS 200, operating in the UE mode, requests the macro-BS 100 to allocate transmission frames. The femto-BS 200 can communicate directly with the macro-BS for the allocated frames. Particularly, the femto-BS 200 performs a transition from the BS mode to the UE mode periodically or when a specific event occurs.

In order to transition to the UE mode periodically, the femto-BS 200 is provided with a timer. When the timer expires, the femto-BS 200 transitions to the UE mode and requests the macro-BS 100 to allocate a transmission resource. Also, the femto-BS 200 can be configured to transition to the UE mode and request resource allocation when a specific event occurs. The transmission resource includes uplink and downlink resources.

The periodic mode transition and event-driven mode transition are described separately.

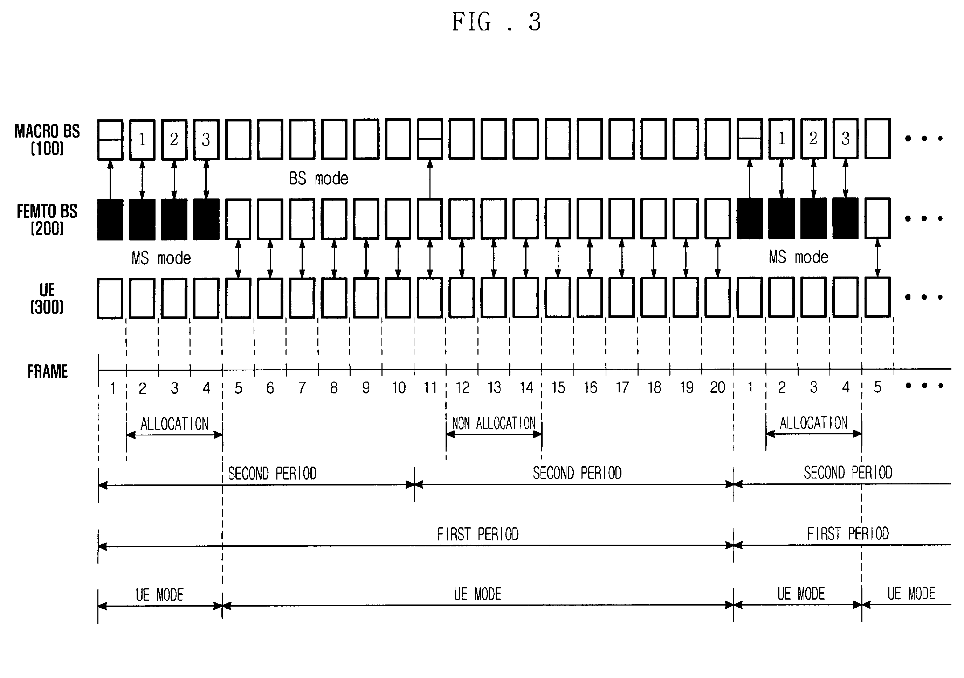

FIG. 3 is a timing diagram illustrating a periodic mode transition of a femto-BS of the communication system according to an embodiment of the present invention.

In an embodiment of the present invention, the femto-BS 200 operates either in the BS mode or in the UE mode. The femto-BS 200 communicates with the UE in the BS mode and with the macro-BS 100 in the UE mode. As aforementioned, the femto-BS 200 is allocated the uplink and downlink resources from the macro-BS 100 for communication with the macro BS 100. Accordingly, the femto-BS 200 sends the macro-BS 100 a resource allocation request periodically. As aforementioned, upon receipt of the periodic resource allocation request, the macro-BS 100 allocates the persistent resource. In an embodiment of the present invention, the femto-BS 200 sends the macro-BS 100 the resource allocation request every long period (first period) and, when there is data to transmit at a start of every short period (second period). The short period is shorter than the long period in time. Preferably, a short period value is set to a divisor of a long period value.

In an embodiment of the present invention, the macro-BS 100 performs scheduling the uplink and downlink resources fairly with the radio frame divided into 20 frames. In FIG. 3, the long period (first period) is composed of 20 frames and the short period (second period) is composed of 10 frames. In order to simplify the explanation, the 20 frames are called 1st to 20th frames.

The femto-BS 200 is provided with a first timer for counting the long period (first period) and a second timer for counting the short period (second period). When the first timer has expired, the femto-BS 200 enters the UE mode and requests the macro-BS 100 for a resource.

When the second timer has expired, the femto-BS 200 enters the UE mode and requests the macro-BS 100 for a transmission resource. When there is no data to transmit at the expiry of the second timer, the femto-BS 200 stays in the BS mode without transmission of the resource allocation request. In this manner, the femto-BS 200 can transmit data during the short period only when there is data to transmit at the expiry of the second timer, thereby reducing waste of radio resources. Referring to FIG. 3, the first period is composed of 20 frames starting with the 1st frame, and the second period is composed of contiguous 10 frames starting with the 10th frame.

The femto-BS 200 operates in the UE mode for the 1st to 4th frames and operates in the BS mode for the 5th to 8th frames.

That is, the femto-BS 200 enters the UE mode and requests the macro BS 100 for a resource at the 1st frame. As aforementioned, the femto-BS 200 maintains its UE mode for 3 frames with the persistent resource. Consequentially, the femto-BS 200 stays in the UE mode for the 4 frames (the 1st to 4th frames).

The femto-BS 200 checks whether there is data to transmit at the 11th frame and, if any, transitions to the UE mode; otherwise the femto-BS 200 maintains the BS mode.

FIG. 3 is depicted under the assumption that there is no data to transmit. If there is data to transmit, the femto-BS 200 operates in the UE mode for the 11th to 14th frames.

As shown in FIG. 3, the femto-BS 200, operating in the UE mode, requests the macro-BS 100 for the transmission resource at the 1st frame. The femto-BS 200 can use the 2nd to 4th frames for the uplink and downlink. That is, the femto-BS 200 can communicate with the macro-BS 100 in the UE mode. The femto-BS 200 operating in the BS mode can communicate with the UE for the 5th to 20th frames.

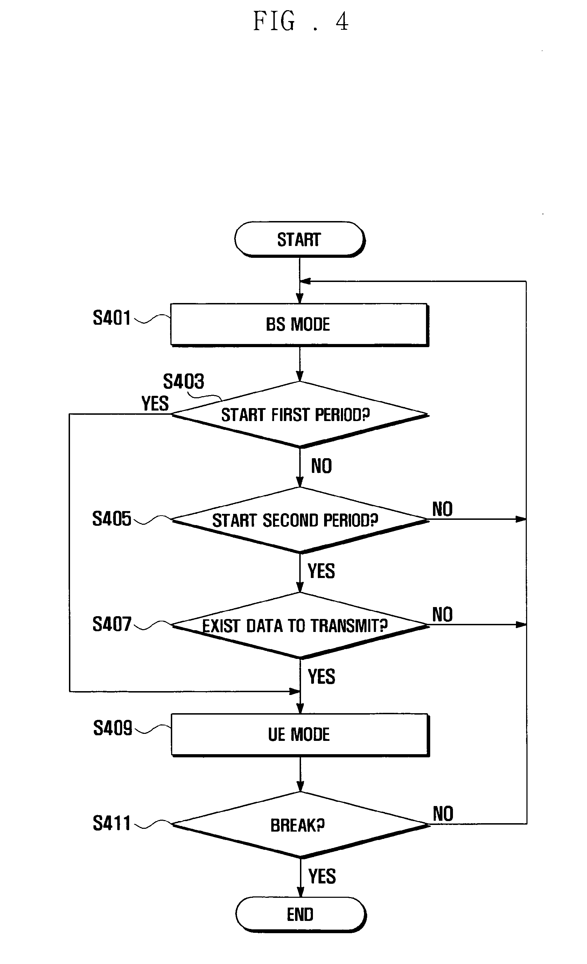

FIG. 4 is a flowchart illustrating an operation mode transition procedure of a femto-BS according to an embodiment of the present invention.

It is assumed that the femto-BS 200 stores the synchronizations with the macro-BS 100 and the UE 300, and the macro-BS 100 allocates the persistent resource for 3 frames.

Referring to FIG. 4, the femto-BS 200 first operates in the BS mode in step S401. In the BS mode, the femto-BS communicates with the UE 300.

While operating in the BS mode, the femto-BS 200 monitors to detect the start of the first period in step S403. If the start of the first period is detected, the femto BS 200 transitions to the UE mode in step S409. That is, the femto-BS 200 determines whether the first timer has expired and, if expired, enters the UE mode. In the UE mode, the femto-BS 200 requests the macro-BS 100 for a resource and the macro-BS 100 responds by allocating the persistent resource. As described above, the persistent resource is allocated for 3 frames. As in the case of FIG. 3, the femto-BS 200 requests the macro-BS 100 for a resource at the 1st frame and the macro-BS 100 responds by allocating the persistent resource for the 2nd to 4th frames such that the femto-BS 200 can communicate with the macro-BS 100 for the 2nd to 4th frames.

If the start of the first period is not detected yet, the femto-BS 200 determines whether the start of the second period is detected in step S405. The start of the second period is determined by detecting the expiry of the second timer. If the start of the second period is detected, the femto-BS 200 determines whether there is data to transmit in step S407; otherwise, the process goes to step S401.

If there is data to transmit at step S407, the femto-BS 200 enters the UE mode in step S409.

Upon entering the UE mode, the femto-BS 200 requests the macro-BS 100 for the persistent resource and communicates with the macro-BS 100 directly for the predetermined number of frames. Referring to FIG. 3, when there is data to transmit, the femto-BS 200 requests the macro-BS 100 for a resource at the 11th frame and communicates with the macro-BS 100 for the 12the to 14the frames.

Otherwise, if there is no data to transmit at step S407, the process goes to step S401.

FIG. 3 shows the situation in which the femto-BS 200 has no data to transmit.

As described above, the femto-BS 200 operates in the BS mode for a predetermined time duration for serving the UE located in its service area and operates in the UE mode during a fraction of the predetermined time for communicating with the macro-BS 100 serving the femto-BS 200 as a UE.

The transition between the BS and UE modes repeats as long as the femto-BS 200 does not break down or power off. Step S411 is provided in consideration of a problematic situation. When an unexpected problem, such as power-off of the femto-BS 200, occurs at step S411, the mode transition procedure ends. When no problem occurs, the femto-BS 200 transitions between the BS and UE modes, repeating steps S401 to S411.

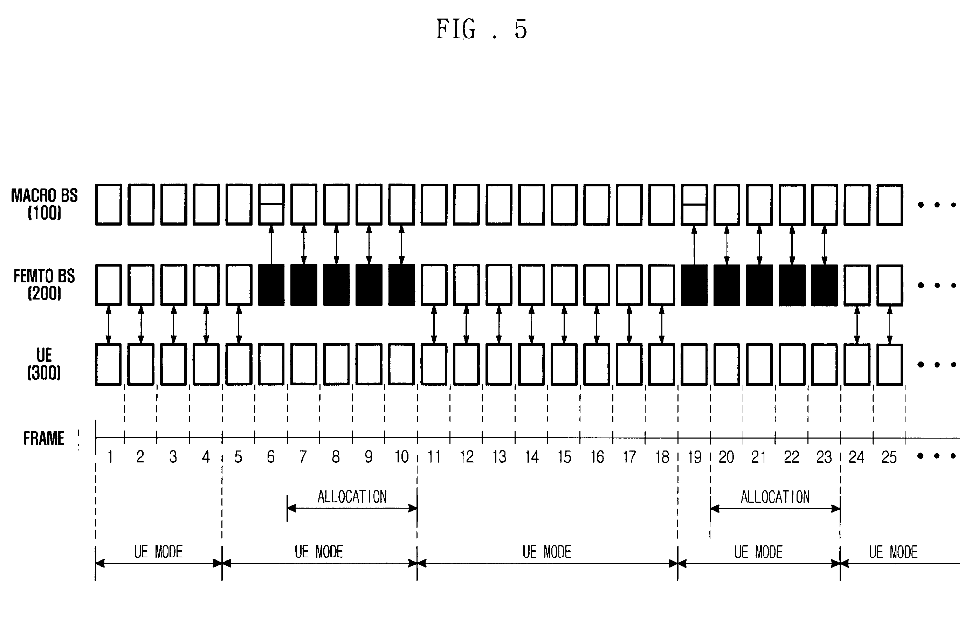

As described above, the femto-BS 200 enters the UE mode periodically for communicating with the macro-BS 100. In an embodiment of the present invention, the femto-BS 200 can be configured to enter the UE mode when a specific event occurs. The event-driven mode transition procedure is described hereinafter in detail. FIG. 5 is a timing diagram illustrating an event-driven mode transition of a femto-BS of the communication system according to an embodiment of the present invention.

In an embodiment of the present invention, the femto-BS 200 operates either in the BS mode or in the UE mode. The femto-BS 200 communicates with the UE in the BS mode and with the macro-BS 100 in the UE mode. The femto-BS 200 requests the macro-BS 100 for resource allocation when a predetermined event occurs. Unlike the periodic request in the periodic mode transition, the femto-BS 200 requests a resource when it detects a specific event, and the macro-BS 100 responds by allocating the non-persistent resource to the femto-BS 200. As aforementioned, the non-persistent resource is allocated in a unit of 4 frames.

The predetermined event is an event requiring a resource for communication between the femto-BS 200 and the macro-BS 100. For example, the event can be a handover. In an embodiment of the present invention, when handover occurs, the femto-BS 200 enters the UE mode for exchanging control data related to the handover with the macro-BS 100.

When a specific event occurs, the femto-BS 200 enters the UE mode and requests the macro-BS 100 for resource. After the macro-BS 100 allocates the persistent resource to the femto-BS 200, the femto-BS 200 communicates with the macro BS 100 for a preset number of frames. In FIG. 5, the persistent resource is 4 frames.

FIG. 5 is depicted under the assumption that the specific event occurs at the 6th frame and the 19th frame. Since 4 frames are allocated as the non-persistent resource, the femto-BS 200 operates in the UE mode for the 6th to 10th frames and the 19the to 23rd frames, and operates in the BS mode for the 1st to 5th frames, the 11 th to 18th frames, and the 24th and 25th frames.

The event-driven mode transition is described only with the event occurring at the 6th frame. If the event is detected at the 6th frame, the femto-BS 200 enters the UE mode and requests the macro-BS 100 for a resource. The femto-BS 200, allocated a resource from the macro-BS 100, stays in the UE mode for the 7th to 10th frames as the non-persistent resource. That is, the femto-BS 200 operates in the UE mode for the 6th to 10th frames. Also, if the event is detected at the 19th frame, the femto-BS 200 enters the UE mode and requests the macro-BS 100 for a resource. The femto-BS 200 operates in the UE mode for the 20th to 23rd frames.

The femto-BS 200, operating in the UE mode, requests that the macro-BS 100 allocate an uplink resource for the 6th to 10th frames. The femto-BS 200 can be allocated the uplink and downlink resources for the 7th to 10th and 20th to 23rd frames. In the BS mode, the femto-BS 200 communicates with the UE 300 for the 1st to 5th frames, the 11 th to 18th frames, and the 24th and 25th frames.

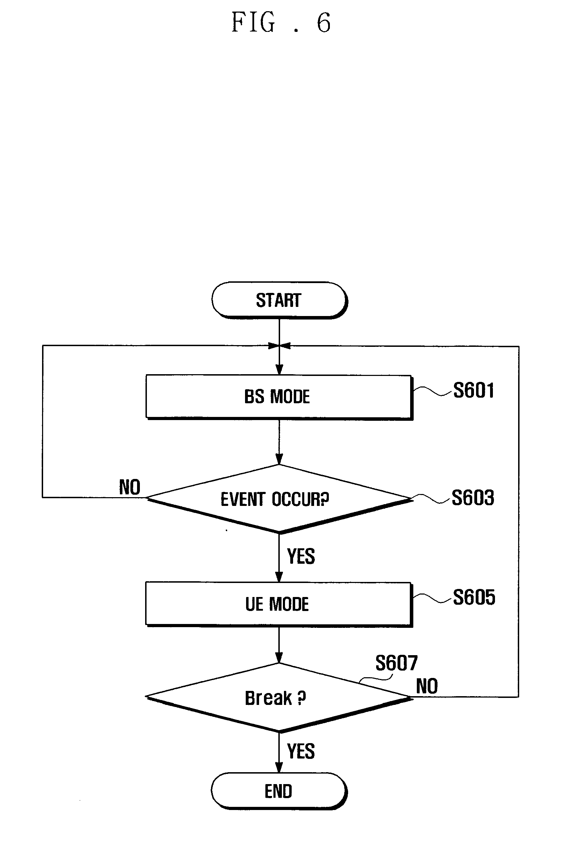

FIG. 6 is a flowchart illustrating an operation mode transition procedure of a femto-BS according to another embodiment of the present invention.

FIG. 6 is depicted under the assumption that the femto-BS 200 stores the synchronizations with the macro-BS 100 and the UE 300, and the macro-BS 100 allocates the non-persistent resource to the femto-BS 200 for 4 frames.

Referring to FIG. 6, the femto-BS 200 first operates in the BS mode in step S601. In the BS mode, the femto-BS 200 communicates with the UE 300 located in its service area.

While operating in the BS mode, the femto-BS 200 monitors to detect a mode transition trigger event in step S603. The mode transition trigger event may be generation of data to transmit to the macro-BS 100 directly. The mode transition trigger event can be a handover event which requires exchange of control data with the macro-BS 100.

If a mode transition trigger event is detected, the femto-BS 200 transitions to the UE mode in step S605. The femto-BS 200 operating in the UE mode requests the macro-BS 100 for a resource and the macro-BS 100 responds by allocating the non-persistent resource to the femto-BS 200 such that the femto-BS 200 communicates with the macro-BS 100 for the preset number of frames with the non-persistent resource. As assumed above, the preset number of frames is 4. Referring to FIG. 5, the femto-BS 200 requests the macro-BS 100 for a resource at the 6th frame and communicates directly with the macro-BS 100 for the 7th to 10th frames allocated by the macro-BS 100.

If no mode transition trigger event is detected, the process goes to step S601.

As described above, the femto-BS 200 operates in the BS mode for predetermined time duration and operates in the UE mode for a fraction of the predetermined time duration. The mode transition between the BS and UE modes continues as long as the femto-BS 200 does not break down or power off. Step S607 is provided in consideration of a problematic situation. When an unexpected problem, such as power-off of the femto-BS 200, occurs at step S607, the mode transition procedure ends; otherwise, the process goes to step S601. That is, the femto-BS 200 transitions between the BS and UE modes, repeating steps S601 to S607 as long as any problematic event does not occur.

As described above, the femto-BS 200 operating in the BS mode transitions to the UE mode periodically or when a mode transition trigger event occurs. In the UE mode, the femto-BS 200 can communicate with the macro-BS 100 directly. The direct communication between the femto-BS 200 and the macro-BS 100 is advantageous to exchange control messages, especially in the handover process. A handover process between the femto-BS 200 and the macro-BS 100 is described hereinafter in detail.

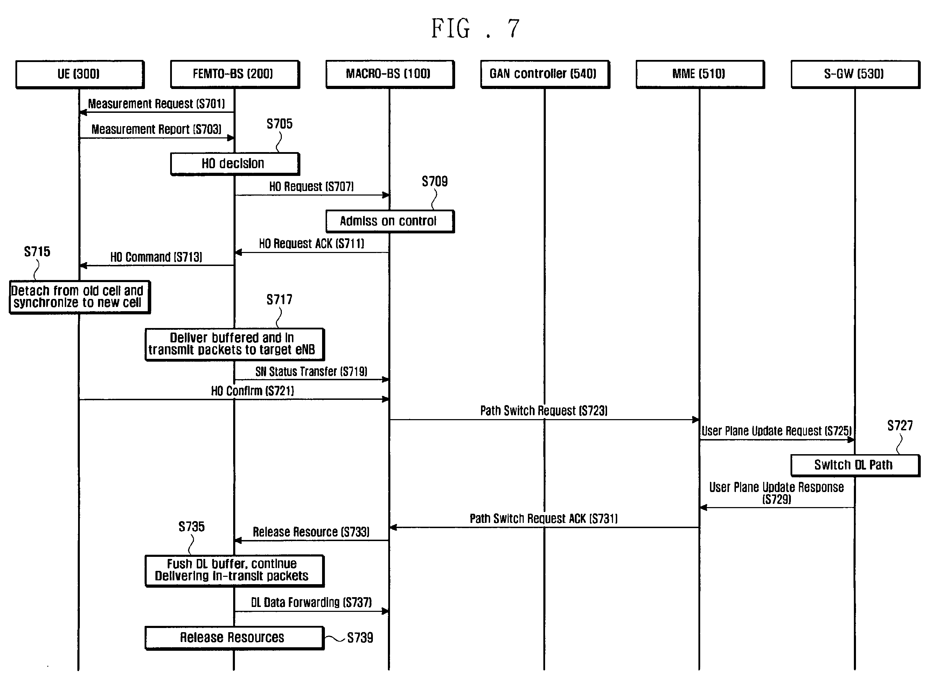

FIG. 7 is a signaling diagram illustrating a handover process between a femto-BS and a macro-BS in a communication system according to an embodiment of the present invention. FIG. 7 shows a situation in which a UE 300 performs a handover from the femto-BS 200 to the macro-BS 100. Although not depicted, the handover from the macro-BS 100 to the femto-BS 200 can be performed in similar manner.

Referring to FIG. 7, the femto-BS 200 sends a Measurement Request message to the UE 300 in step S701. Upon receipt of the Measurement Request message, the UE 300 measures the neighbor cells and frequency bands according to the cause of the Measurement Request message and, when the measurement satisfies a predetermined condition, sends a Measurement Report message to the femto-BS 200 in step S703. Upon receipt of the Measurement Report message, the femto-BS 200 makes a handover (HO) decision with reference to the Measurement Report message in step S705. Next, the femto-BS 200 sends a HO request message to the macro-BS 100 in step S707. Upon receipt of the HO Request message, the macro-BS 100 performs an Admission control process in step S709 and sends an HO Request Acknowledgement (ACK) message to the femto-BS 200 in step S711.

Upon receipt of the HO Request ACK message, the femto-BS 200 sends an HO Command message to the UE 300 in step S713.

Upon receipt of the HO Command message, the UE 300 reconfigures its radio environment in step S715. While reconfiguring the radio environment, the UE 300 is detached from the old cell (femto-BS) and synchronizes with the new cell (macro-BS). That is, the UE accesses the macro-BS 100 at step S715.

Meanwhile, after sending the HO command message, the femto-BS 200 delivers buffered and in-transit data to the target eNB (macro-BS) in step S717. Next, the femto-BS 200 sends a Sequence Number (SN) Status Transfer message to the macro-BS 100 in step S719.

The UE 300 sends an HO confirm message to the macro-BS 100 in step S721. After receiving the SN Status Transfer message from the femto-BS 200 and the HO Confirm message from the UE 300, the macro-BS 100 sends a Path Switch Request message indicating the cell switch of the UE 300 to the MME 510 in step S723. Upon receipt of the Path Switch Request message, the MME S10 sends a User Plane Update Request message to the S-GW 530 in step S725. Upon receipt of the User Plane Update Request message, the S-GW 530 switches the DL path in step S727. At this time, the S-GW 530 switches the DL path to the macro-BS 100. Next, the S-GW 530 sends a User Plane Update Response message to the MME 510 in response to the User Plane Update Request message in step S729.

Upon receipt of the User Plane Update Response message, the MME 520 sends a Path Switch Request ACK message to the macro-BS 100 in response to the Path Switch Request message in step S731. Upon receipt of the Path Switch Request ACK message, the macro-BS 100 sends a Release Resource message to the femto-BS 200 in step S733.

Upon receipt of the Release Resource message, the femto-BS 200 flushes its DL buffer and continues delivering in-transit data in step S735.

Next, the femto-BS 200 forwards the DL data destined to the UE 300 to the macro-BS 100 in step S737.

After completing the DL data forwarding, the femto-BS 200 releases the resources allocated to the UE 300 in step S739.

Steps S701, S703, and S713 are performed when the femto-BS 200 operates in the BS mode, and steps S707, S711, S719, S733, and S737 are performed when the femto-BS 200 operates in the UE mode.

Particularly, the HO Request message at step S703 and the HO Request ACK message at step S711 should be exchanged promptly for facilitating the handover process. The SN Status Transfer message is sent at step S719 for informing the macro-BS 100 of the buffered data to transmit to the UE 300 such that the buffered data is forwarded to the macro-BS 100 at step S739. When this handover occurs while the UE 300 receives a real time service, any delay of these message flows causes service breakage.

If the direct communication between the femto-BS 200 and the macro BS 100 is not supported, the femto-BS 200 should establish a communication channel with the macro-BS 100 via the ISP network 600, the GAN controller 540, and the S-GW 520 for exchanging the control data with the macro-BS 100, resulting in handover processing delay. In embodiments of the present invention, since the femto-BS 200 can communicate with the macro-BS 100 directly in the UE mode, it is possible to solve the problems caused by the control data exchange delay.

As described above, the communication system comprising the femto-BS and the macro-BS provides a direct radio interface between the femto-BS and macro-BS, thereby securing latency-free communication.

Also, the communication of the present invention allows a femto-BS to communicate with a macro base station directly in the UE mode so as to avoid transmission delay of control data, resulting in improvement of network performance.

While the invention has been shown and described with reference to certain preferred embodiments thereof, it will be understood by those skilled in the art that various changes in form and detail may be made therein without departing from the scope of the present invention as defined by the appended claims.

## Claims

1. A mobile communication system comprising:
at least one macro base station (100); and
at least one femto base station (200) for serving serving terminals (300) located within a service area (2000) of the at least one femto base station and for communicating with the at least one macro base station (100),
**characterized in that**
the at least one macro base station (100) is configured to allocate a resource to one or more user equipments; and
the at least one femto base station (200) is configured to operate in a base station mode for serving the terminals (300) located within a service area (2000) of the at least one femto base station (200) and is configured to operate in a user equipment mode for communicating with the at least one macro base station (100) using the resource allocated by the at least one macro base station (100).

2. The mobile communication system of claim 1, wherein the at least one femto base station (200) is configured to transition from the base station mode to the user equipment mode and is configured to maintain the user equipment mode for duration of the resource allocated by the at least one macro base station (100).

3. The mobile communication system of any of claims 1 and 2, wherein the at least one femto base station (200) has a first period and a second period, which is shorter than the first period, and is configured to enter the user equipment mode at a start of the first period and when the at least one femto base station (200) has data to transmit at a start of the second period.

4. The mobile communication system of claim 1, wherein the at least one femto base station (200) is configured to enter the user equipment mode when a predetermined event occurs and operates in the user equipment mode for duration of the resource allocated by the at least one macro base station (100).

5. The mobile communication system of claim 1, wherein the at least one femto base station (200) is configured to exchanges control data for a handover with the at least one macro base station in the user equipment mode.

6. A communication method of a femto base station (200) in a communication system, which includes at least one macro base station (100) and at least one femto base station (200), the communication method comprising the steps of:
serving at least one user equipment (300) located in a service area (2000) of the at least one femto base station (200); and
communicating with the at least one macro base station (100);
**characterized in that** the steps comprise:
operating (S401, S601) in a base station mode for serving the at least one user equipment (300) located in a service area (2000) of the at least one femto base station (200); and
operating (S409, S605) in a user equipment mode for communicating with the at least one macro base station (100) using a resource allocated by the at least one macro base station (100).

7. The communication method of claim 6, wherein operating in the user equipment mode comprises transitioning from the base station mode to the user equipment mode periodically.

8. The communication method of claim 7, wherein operating in the user equipment mode comprises transitioning from the base station mode to the user equipment mode, when a predetermined event occurs in the base station mode.

9. The communication method of claim 7, wherein operating in the user equipment mode comprises:
determining (S403) whether a start of a first period is detected; and
transitioning from the base station mode to the user equipment mode, when the start of the first period is detected.

10. The communication method of claim 9, wherein operating in the user equipment mode further comprises:
Determining (S405), when a start of the first period is not detected, whether a start of a second period is detected, wherein the second period is shorter than the first period;
transitioning from the base station mode to the user equipment mode, when the start of the second period is detected and transmission data exists.

11. The communication method of claim 6, wherein operating in the user equipment mode comprises exchanging control data required for a handover with the at least one macro base station (100).

## Patentansprüche

1. Mobilkommunikationssystem, das Folgendes umfasst:
mindestens eine Makrobasisstation (100); und
mindestens eine Femtobasisstation (200) zum Bedienen bedienender Endgeräte (300), die sich innerhalb eines Bedienungsbereichs (2000) der mindestens einen Femtobasisstation befinden, und zum Kommunizieren mit der mindestens einen Makrobasisstation (100),
**dadurch gekennzeichnet, dass**
die mindestens eine Makrobasisstation (100) dafür konfiguriert ist, einem oder mehreren Nutzergeräten eine Ressource zuzuweisen; und
die mindestens eine Femtobasisstation (200) dafür konfiguriert ist, in einem Basisstationsmodus zu arbeiten, um die Endgeräte (300) zu bedienen, die sich innerhalb eines Bedienungsbereichs (2000) der mindestens einen Femtobasisstation (200) befinden, und dafür konfiguriert ist, in einem Nutzergerätemodus zu arbeiten, um unter Verwendung der Ressource, die durch die mindestens eine Makrobasisstation (100) zugewiesen ist, mit der mindestens einen Makrobasisstation (100) zu kommunizieren.

2. Mobilkommunikationssystem nach Anspruch 1, wobei die mindestens eine Femtobasisstation (200) dafür konfiguriert ist, aus dem Basisstationsmodus in den Nutzergerätemodus überzugehen und den Nutzergerätemodus so lange beizubehalten, wie die Ressource durch die mindestens eine Makrobasisstation (100) zugewiesen ist.

3. Mobilkommunikationssystem nach einem der Ansprüche 1 und 2, wobei die mindestens eine Femtobasisstation (200) eine erste Periode und eine zweite Periode, die kürzer als die erste Periode ist, aufweist und dafür konfiguriert ist, an einem Beginn der ersten Periode, und wenn die mindestens eine Femtobasisstation (200) Daten zu senden hat, an einem Beginn der zweiten Periode, in den Nutzergerätemodus einzutreten.

4. Mobilkommunikationssystem nach Anspruch 1, wobei die mindestens eine Femtobasisstation (200) dafür konfiguriert ist, in den Nutzergerätemodus einzutreten, wenn ein vorgegebenes Ereignis eintritt, und in dem Nutzergerätemodus arbeitet, solange die Ressource durch die mindestens eine Makrobasisstation (100) zugewiesen ist.

5. Mobilkommunikationssystem nach Anspruch 1, wobei die mindestens eine Femtobasisstation (200) dafür konfiguriert ist, in dem Nutzergerätemodus mit der mindestens einen Makrobasisstation Steuerungsdaten für eine Übergabe auszutauschen.

6. Kommunikationsverfahren einer Femtobasisstation (200) in einem Kommunikationssystem, das mindestens eine Makrobasisstation (100) und mindestens eine Femtobasisstation (200) enthält, wobei das Kommunikationsverfahren folgende Schritte umfasst:
Bedienen mindestens eines Nutzergerätes (300), das sich in einem Bedienungsbereich (2000) der mindestens einen Femtobasisstation (200) befindet; und
Kommunizieren mit der mindestens einen Makrobasisstation (100);
**dadurch gekennzeichnet, dass** die Schritte Folgendes umfassen:
Arbeiten (S401, S601) in einem Basisstationsmodus zum Bedienen des mindestens einen Nutzergerätes (300), das sich in einem Bedienungsbereich (2000) der mindestens einen Femtobasisstation (200) befindet; und
Arbeiten (S409, S605) in einem Nutzergerätemodus zum Kommunizieren mit der mindestens einen Makrobasisstation (100) unter Verwendung einer Ressource, die durch die mindestens eine Makrobasisstation (100) zugewiesen ist.

7. Kommunikationsverfahren nach Anspruch 6, wobei das Arbeiten in dem Nutzergerätemodus das periodische Übergehen aus dem Basisstationsmodus in den Nutzergerätemodus umfasst.

8. Kommunikationsverfahren nach Anspruch 7, wobei das Arbeiten in dem Nutzergerätemodus das Übergehen aus dem Basisstationsmodus in den Nutzergerätemodus umfasst, wenn in dem Basisstationsmodus ein vorgegebenes Ereignis eintritt.

9. Kommunikationsverfahren nach Anspruch 7, wobei das Arbeiten in dem Nutzergerätemodus Folgendes umfasst:
Feststellen (S403), ob ein Beginn einer ersten Periode detektiert wird; und
Übergehen aus dem Basisstationsmodus in den Nutzergerätemodus, wenn der Beginn der ersten Periode detektiert wird.

10. Kommunikationsverfahren nach Anspruch 9, wobei das Arbeiten in dem Nutzergerätemodus Folgendes umfasst:
Feststellen (S405), wenn kein Beginn der ersten Periode detektiert wird, ob ein Beginn einer zweiten Periode detektiert wird, wobei die zweite Periode kürzer ist als die erste Periode;
Übergehen aus dem Basisstationsmodus in den Nutzergerätemodus, wenn der Beginn der zweiten Periode detektiert wird und Sendedaten vorhanden sind.

11. Kommunikationsverfahren nach Anspruch 6, wobei das Arbeiten in dem Nutzergerätemodus umfasst, Steuerungsdaten, die für eine Übergabe benötigt werden, mit der mindestens einen Makrobasisstation (100) auszutauschen.

## Revendications

1. Système de communication mobile comprenant :
au moins une macro station de base (100) ; et
au moins une femto station de base (200) pour desservir des terminaux (300) situés dans une zone de desserte (2000) de l'au moins une femto station de base et pour communiquer avec l'au moins une macro station de base (100),
**caractérisé en ce que**
l'au moins une macro station de base (100) est configurée pour allouer une ressource à un ou plusieurs équipements d'utilisateur ; et
l'au moins une femto station de base (200) est configurée pour fonctionner dans un mode de station de base pour desservir les terminaux (300) situés à l'intérieur d'une zone de desserte (2000) de l'au moins une femto station de base (200) et est configurée pour fonctionner dans un mode d'équipement d'utilisateur pour communiquer avec l'au moins une macro station de base (100) en utilisant la ressource allouée par l'au moins une macro station de base (100).

2. Système de communication mobile selon la revendication 1, dans lequel l'au moins une femto station de base (200) est configurée pour passer du mode de station de base au mode d'équipement d'utilisateur et est configurée pour maintenir le mode d'équipement d'utilisateur pendant une durée de la ressource allouée par l'au moins une macro station de base (100).

3. Système de communication mobile selon l'une quelconque des revendications 1 et 2, dans lequel l'au moins une femto station de base (200) a une première période et une deuxième période qui est plus courte que la première période, et est configurée pour entrer dans le mode d'équipement d'utilisateur au début de la première période et lorsque l'au moins une femto station de base (200) a des données à transmettre au début de la deuxième période.

4. Système de communication mobile selon la revendication 1, dans lequel l'au moins une femto station de base (200) est configurée pour entrer dans le mode d'équipement d'utilisateur lorsqu'un événement prédéterminé survient et pour fonctionner dans le mode d'équipement d'utilisateur pendant la durée de la ressource allouée par l'au moins une macro station de base (100).

5. Système de communication mobile selon la revendication 1, dans lequel l'au moins une femto station de base (200) est configurée pour échanger des données de commande pour un transfert avec l'au moins une macro station de base dans le mode d'équipement d'utilisateur.

6. Procédé de communication d'une femto station de base (200) dans un système de communication, qui comprend au moins une macro station de base (100) et au moins une femto station de base (200), le procédé de communication comprenant les étapes consistant à :
desservir au moins un équipement d'utilisateur (300) situé dans une zone de desserte (2000) de l'au moins une femto station de base (200) ; et
communiquer avec l'au moins une macro station de base (100) ;
**caractérisé en ce qu'**il comprend en outre les étapes consistant à :
fonctionner (S401, S601) dans un mode de station de base pour desservir l'au moins un équipement d'utilisateur (300) situé dans une zone de desserte (2000) de l'au moins une femto station de base (200) ; et
fonctionner (S409, S605) dans un mode d'équipement d'utilisateur pour communiquer avec l'au moins une macro station de base (100) en utilisant une ressource allouée par l'au moins une macro station de base (100).

7. Procédé de communication selon la revendication 6, dans lequel le fonctionnement dans le mode d'équipement d'utilisateur comprend la transition périodique du mode de station de base au mode d'équipement d'utilisateur.

8. Procédé de communication selon la revendication 7, dans lequel le fonctionnement dans le mode d'équipement d'utilisateur comprend la transition du mode de station de base au mode d'équipement d'utilisateur lorsqu'un événement prédéterminé survient dans le mode de station de base.

9. Procédé de communication selon la revendication 7, dans lequel le fonctionnement dans le mode d'équipement d'utilisateur comprend les étapes consistant à :
déterminer (S403) si un début d'une première période est détecté ; et
passer du mode de station de base au mode d'équipement d'utilisateur lorsque le début de la première période est détecté.

10. Procédé de communication selon la revendication 9, dans lequel le fonctionnement dans le mode d'équipement d'utilisateur comprend en outre les étapes consistant à :
déterminer (S405), lorsqu'un début de la première période n'est pas détecté, si un début d'une deuxième période est détecté, dans lequel la deuxième période est plus courte que la première période ;
passer du mode de station de base au mode d'équipement d'utilisateur lorsque le début de la deuxième période est détecté et il existe des données de transmission.

11. Procédé de communication selon la revendication 6, dans lequel le fonctionnement dans le mode d'équipement d'utilisateur comprend l'étape consistant à échanger des données de commande pour un transfert avec l'au moins une macro station de base (100).
